# EUROPÄISCHE PATENTSCHRIFT

(11) **EP 1 752 745 B1**
(45) Veröffentlichungstag und Bekanntmachung des Hinweises auf die Patenterteilung: **16.03.2011**
(21) Anmeldenummer: 06014771.7
(22) Anmeldetag: 15.07.2006
(51) Int. Cl.: G01G 19/56

(54) **Löffelwaage**
Spoon with weigh scale
Cuillère avec cellule de pesage

(30) Priorität: 10.08.2005 CN 200520103573; 28.12.2005 DE 102005062980
(43) Veröffentlichungstag der Anmeldung: 14.02.2007
(73) Patentinhaber: Mingle Instrument GmbH Europe, 47877 Willich (DE)
(72) Erfinder: Bayerl, Rudolf, 47877 Willich (DE); Ming, Ho Wai, Tai Po N.T. (HK)
(74) Vertreter: Lenzing Gerber Stute

(56) Entgegenhaltungen:
- DE-A1- 10 125 796
- US-A1- 2005 011 367
- US-B1- 6 573 462
- PATENT ABSTRACTS OF JAPAN Bd. 008, Nr. 171 (P-293), 8. August 1984 (1984-08-08) -& JP 59 067425 A (MATSUSHITA DENKO KK), 17. April 1984 (1984-04-17)

## Beschreibung

Die vorliegende Erfindung betrifft eine Löffelwaage, insbesondere zur Verwendung bei der Bestimmung des Gewichts von verschiedenen Gewürzen beim Kochen.

Die meisten derzeit verwendeten Löffel sind einfache einteilige Gegenstände ohne irgendwelche zusätzlichen Funktionen. Insbesondere können Löffel nicht benutzt werden, um die Menge der auf dem Löffel befindlichen Gegenstände zu bestimmen. Solche Löffel können die Anforderungen der Benutzer bei der Gewichtsbestimmung von Koch- und Backzutaten nicht erfüllen. Die Angaben "ein Teelöffel" oder "ein Esslöffel" sind ungenau.

Aus der deutschen Offenlegungsschrift DE 101 25 796 A1 ist eine elektronische Handwaage bekannt, bei der eine Schütte federnd in einem Handgriff gelagert ist. Das Gewicht der Schütte wird aufgenommen und über ein Display im Griff angezeigt. Die leere Schütte ergibt das Gewicht 0. Bei einer Gewichtsbelastung der Schütte wird diese im Handgriff ausgelenkt und dadurch das auf der Schütte befindliche Gewicht gemessen. Das Display zeigt entsprechend das Gewicht des auf der Schütte befindlichen Schüttgutes an.

In dieser Offenlegungsschrift sind keine genaueren Angaben hinsichtlich der Messtechnik gemacht worden. Insbesondere ist nicht offenbart, wie lagenabhängige Fehler bei der Gewichtsmessung ausgeschlossen werden sollen.

Das japanische Dokument JP 59067425 A zeigt eine Waage für mikroskopische Objekte. Die Waage umfasst einen Basiskörper und eine löffelartig ausgebildete Schale. Die Schale ist über einen Stiel mit dem Basiskörper verbunden. Lastsensoren sind auf die Oberseite und die Unterseite des Stiels aufgeklebt. Diese Waage ist nicht mit einem Handgriff nach Art eines Löffels ausgestattet und deshalb für den Gebrauch im Haushalt ungeeignet.

Das Dokument US 2005/0011367 A1 zeigt einen Löffel mit einem nicht näher beschriebenen Gewichtssensor. Der Löffelstiel ist mit einem Gewinde in den Griff eingeschraubt und kann gegen einen Gabelstiel oder dergleichen ausgetauscht werden. Es ist ein Maximalgewicht für eine auf dem Löffel befindliche Portion vorwählbar, bei deren Überschreiten ein Warnsignal ausgelöst werden soll.

Das US-Patent US 6,573,462 B1 zeigt schließlich eine Schaufel zum Abmessen von Schüttgut. In eine Handgriff ist ein Lastsensor angeordnet, der mit einer senkrecht zur horizontal angeordneten Anlagefläche an dem Handgriff befestigt ist. Über diese Anlagefläche wird die gesamte Gewichtskraft übertragen. Deshalb ist die Ausdehnung in der vertikalen Richtung relativ groß. Der Sensor ist nicht in den Handgriff integriert, sondern in einem benachbarten, vergrößerten Gehäuseabschnitt. Dadurch wird die Waage unhandlich.

Es ist daher Aufgabe der vorliegenden Erfindung, eine Waage in Form eines Löffels zur Verfügung zu stellen, die präzise Messungen auch im Wägebereich von weniger als 1 g ermöglicht.

Diese Aufgabe wird von einer Löffelwaage mit den Merkmalen des Anspruchs 1 gelöst.

Um die Aufgabe zu lösen, stellt die Erfindung eine Bauform einer Löffelwaage zur Verfügung, die einen Löffelkörper umfasst, einen Handgriff, einen Horizontalsensor und einen Aufhängering. Der Löffelkörper umfasst den Löffelkopf und den Löffelkopfanschluss. Der Löffelkopfanschluss ist mit einem Gewichtssensor verbunden, welcher im Innern des Handgriffs angeordnet ist. Weiter kann der Handgriff mit einem Aufhängering versehen sein, um den Löffel für Aufbewahrungszwecke aufhängen zu können. Ein LCD-Display kann weiter innerhalb des Handgriffs angeordnet sein. Um die Menge des auf dem Löffelkopf angeordneten Materials über das LCD-Display anzuzeigen, ist der Gewichtssensor mit dem LCD-Display über einen Analog/Digital-Konverter und einem Mikrocontroller verbunden. Der Horizontalsensor ist in dem Handgriff angeordnet, um die horizontale Ausrichtung des Löffels sicherzustellen, wenn Wägeoperationen ausgeführt werden.

Das Gehäuse des beschriebenen Handgriffs kann sich zusammensetzen aus einer Linse, einem Betätigungsknopf, dem Horizontalsensor, der oberen Abdeckung, der unteren Abdeckung und der Batterieabdeckung. Der Betätigungsknopf und die Batterie können auch innerhalb des Gehäuses angeordnet sein. Ein solcher Betätigungsknopf aus Gummi ist mit einem Druckknopf verbunden, der innerhalb der darüber angeordneten Linse oder Gehäusehälfte vorgesehen ist. Eine Platine ist unter dem Gummiknopf angeordnet. Weiter ist das beschriebene LCD-Display zwischen der Linse und der Platine neben dem Gummiknopf angeordnet. Um die Schaltkreise miteinander zu verbinden, ist ein elektrisch leitendes Gummimaterial zwischen dem LCD-Display und der Platine angeordnet. Weiter sind der Horizontalsensor und das LCD-Display auf der gleichen Seite des Handgriffs plaziert, die der konkaven Seite des Löffelkopfes entspricht. Eine Batterieanschlussplatte ist auf der anderen Seite der Platine an einer entsprechenden Stelle angebracht. Diese Batterieanschlussplatte ist mit der bereits beschriebenen Batterie verbunden, die darunter angeordnet ist. Die Batterie ist wiederum zwischen der Batterieanschlussplatte und der Batterieabdeckung angeordnet. Ein Dichtring ist zwischen der Batterieabdeckung und der unteren Gehäusehälfte vorgesehen, um die Wasserfestigkeit zu verbessern. Schließlich ist der beschriebene Horizontalsensor in eine Öffnung der an dem Handgriff angeordneten Linse plaziert. Diese Öffnung ist an demjenigen Ende der Linse positioniert, die der Verbindungsstelle zu der oberen Abdeckung nahe ist. Der Horizontalsensor wird benutzt, um sicherzustellen, dass genaueste Anzeigen erzielt werden, wenn der Löffel horizontal gehalten wird. Bei horizontal ausgerichtetem Horizontalsensor ist die Lastrichtung an dem Gewichtssensor senkrecht zu der Horizontalebene. Weiter ist die Batterieabdeckung an demjenigen Ende des Handgriffs angeordnet, an dem auch der Aufhängering angeordnet ist. Eine konkave Mulde ist in die beschriebene untere Abdeckung eingeformt, um die Batterieabdekkung dort anbringen zu können. Eine solche Batterieabdeckung wird mit dem Handgriff mittels einer Schraube verschraubt.

Aufgabe der Batterie ist es, den H/D-Konverter und den Mikrocontroller auf der Platine mit Spannung zu versorgen, so dass das LCD-Display zur Anzeige der auf dem Löffel befindlichen Gegenstände angesteuert werden kann.

Der beschriebene Löffelkopf und der Löffelkopfanschluss sind eine einstückige Struktur. Die Gestalt des Löffelkopfes kann variiert werden, um unterschiedliche Anwendungen zu ermöglichen. Der Löffelkopfanschluss ist mit dem Gewichtssensor über Schrauben verbunden. Der Gewichtssensor ist zwischen der oberen Abdeckung und der unteren Abdeckung angeordnet. Das Ende des Gewichtssensors, das mit dem Löffelkopfanschluss verbunden ist, ist nicht in mechanischem Kontakt mit der oberen Abdekkung und der unteren Abdeckung. Jedoch ist das andere Ende des Gewichtssensors von Schrauben durchsetzt, die von dem Boden der oberen Abdeckung zu der unteren Abdeckung verlaufen.

Die Funktion der vorliegenden Erfindung liegt darin, einen Analog/Digital-Konverter, die Schaltkreise der Mikrokontrollereinheit und die Druckknöpfe zu benutzen, um die Gewichtsanzeige in Abhängigkeit von dem Gewichtssensor auf dem LCD-Display anzuzeigen, wenn sie benötigt werden. Dieses erlaubt dem Benutzer, die Menge der benötigten Gegenstände auf dem Löffel besser zu kontrollieren. Der Horizontalsensor erleichtert es dabei dem Benutzer, dass Gerät in der richtigen Position zu halten. Außerdem ist ein Aufhängering vorgesehen, um das Verstauen der Löffelwaage zu erleichtern. Der Dichtring verbessert die Wasserfestigkeit dieses Gerätes. Die Vorrichtung kann mit mehreren Druckschaltern versehen sein, die nicht nur einen Ein/Aus-Schalter umfassen, sondern auch eine Umrechnung von Gewichtseinheiten und eine Haltefunktion für das Display. Die Löffelwaage kann auch mit einer automatischen Abschaltvorrichtung versehen sein, die Stromversorgung abschaltet, wenn die Gewichtsanzeige für eine vorgegebene Zeitspanne unverändert bleibt oder wenn keine Knöpfe gedrückt werden. Auf diese Weise kann die Batteriekapazität gespart werden.

Nachfolgend wird ein Ausführungsbeispiel der vorliegenden Erfindung anhand der Zeichnung beschrieben. Es zeigen:
Figur 1 eine Draufsicht auf die Vorrichtung;
Figur 2 eine Unteransicht der Vorrichtung;
Figur 3 einen Querschnitt entlang der Linie A-A;
Figur 4 einen Querschnitt entlang der Linie B-B; sowie
Figur 5 einen Querschnitt entlang der Linie C-C.

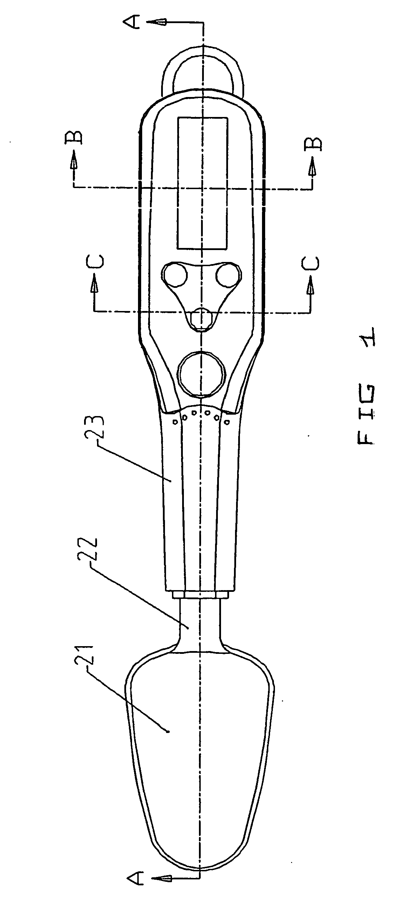

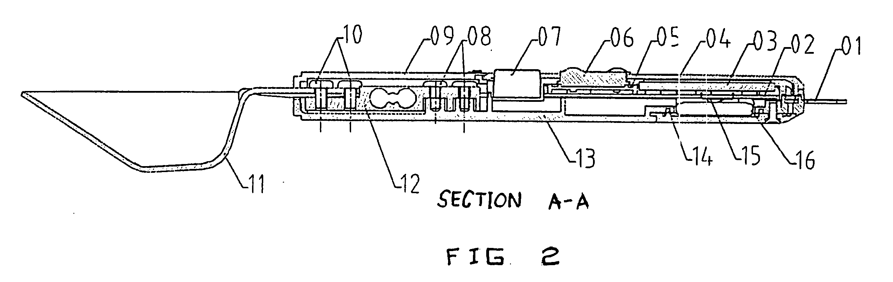

Erfindungsgemäß wird ein Löffel zur Gewichtsmessung bereit gestellt. Wie in der Figur 1 und der Figur 2 dargestellt, umfasst dieser einen Löffelkopf 21, einen Löffelkopfanschluss 22, einen Handgriff 23, einen Horizontalsensor 7 und einen Aufhängering 1. Der Löffelkopfanschluss 22 ist mit dem Handgriff 23 verbunden, während auf der gegenüberliegenden Seite des Handgriffs 23 die Aufhängevorrichtung vorgesehen ist. Ein Gewichtssensor 12 und ein LCD-Display 3 sind in dem Handgriff 23 angeordnet. Der Gewichtssensor 12 und das LCD-Display 3 sind durch die Schaltkreise des Analog/Digital-Wandlers und des Mikrocontrollers verbunden, um die Masse der Gegenstände innerhalb des Löffelkopfes 21 auf dem LCD-Display 3 anzuzeigen. Die Kombination eines Tasters 6 mit dem Horizontalsensor 7 ist neben dem Gewichtssensor 12 und dem LCD-Display 3 angeordnet. Der Löffelkopf 21 und der Löffelkopfanschluss 22 sind ein einteiliges Stück und werden zusammen Löffelkörper 11 genannt, wie dies in den Figuren 1-3 dargestellt ist. Ein Leerraum ist zwischen dem Gewichtssensor 12 und der oberen Abdekkung 9 vorgesehen, in dem Schrauben 10 und 8 angeordnet sind. Der plattenförmige Löffelkopfanschluss 22 ist mit einem Ende des Gewichtssensors 12 durch Schrauben 10 verbunden. Dieser Gewichtssensor 12 ist zwischen der oberen Abdeckung 9 und der unteren Abdeckung 13 angeordnet. Das andere Ende des Gewichtssensors ist von Schrauben 8 durchsetzt, die die Unterseite der oberen Abdeckung 9 und die untere Abdeckung 13 miteinander verbinden. Die obere Abdeckung 9 ist mit der Linse 4 in der Horizontalrichtung ebenso verbunden wie mit der unteren Abdekkung 13, die sich darunter befindet.

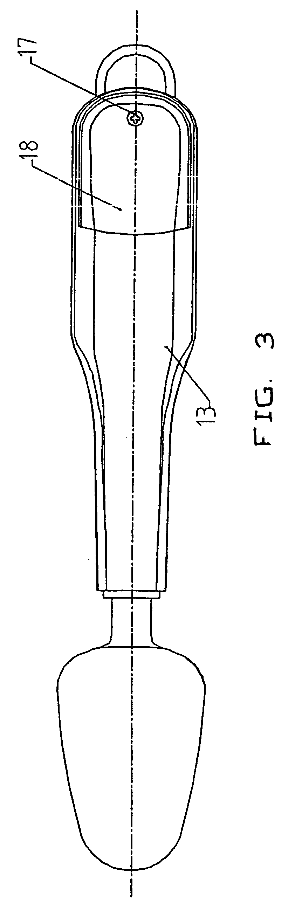

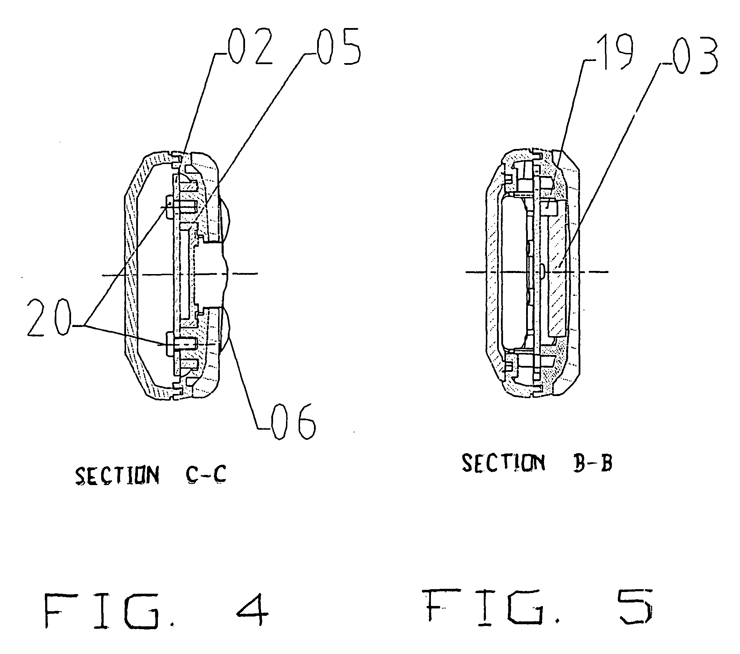

Die gesamte Schale der Handgriffs 23 ist zusammengesetzt aus der Linse 4, dem Taster 6, dem Horizontalsensor 7, der oberen Abdeckung 9, der unteren Abdeckung 13 und der Batterieabdekkung 17. Wie in Figur 3-5 dargestellt, sind auch ein Gummiknopf 5 und eine Batterie 16 innerhalb des Handgriffs 23 vorgesehen. Nachfolgend wird der Aufbau des Handgriffs 23 näher erläutert.

Der Gummiknopf 5 ist mit dem darüber befindlichen Taster 6 verbunden, der wiederum in die Linse 4 eingebettet ist. Die Platine 2 ist unterhalb des Gummiknopfes 5 angeordnet. Das LCD-Display 3 befindet sich zwischen der Platine 2 und der Linse 4 neben dem Gummiknopf 5. Weiter ist das elektrisch leitende Gummi 19 zwischen dem LCD-Display 3 und der Platine 2 vorgesehen. Der Horizontalsensor 7 und das LCD-Display 3 sind weiterhin links und rechts von dem Knopf 6 angeordnet. Die Batterieleiterplatte 15 ist auf der anderen Seite der Platine an der oben beschriebenen Stelle plaziert. Die Batterieleiterplatte ist mit der Batterie 16 verbunden, die zwischen der Batterieleiterplatte 15 und der Batterieabdeckung 18 angeordnet ist. Ein Dichtring 14 ist ebenfalls zwischen der Batterieabdeckung 18 und der unteren Abdeckung 13 angeordnet, um die Fähigkeit, Wasser zu widerstehen, zu verbessern.

Zusätzlich ist der Horizontalsensor 7, der an dem Handgriff 23 angebracht ist, innerhalb einer Öffnung der Linse 4 angeordnet. Diese Öffnung ist an einem Ende der Linse 4 angeordnet, dass sich in der Nähe der Stelle befindet, an der die Linse 4 mit der oberen Abdeckung 9 verbunden ist.

Die Batterieabdeckung 18 ist an dem Ende des Handgriffs 23 angeordnet, an dem auch der Aufhängering 1 angebracht ist. Eine konkave Mulde ist in der unteren Abdeckung 13 an diesem Ende ausgebildet, um dort die Batterieabdeckung 18 anzubringen. Eine Schraube 17 wird verwendet, um die Batterieabdeckung 18 mit der unteren Abdeckung 13 an dem Handgriff 23 zu verschrauben.

### Bezugszeichenliste:

- 1:: Aufhängering
- 2:: Platine
- 3:: LCD-Display
- 4:: Linse
- 5:: Gummiknopf
- 6:: Taster
- 7:: Horizontalsensor
- 8, 10, 17, 20:: Schrauben
- 9:: Obere Abdeckung
- 11:: Löffelkörper
- 12:: Gewichtssensor
- 13:: Untere Abdeckung
- 14:: Dichtring
- 15:: Batterieleiterplatte
- 16:: Batterie
- 18:: Batterieabdeckung
- 19:: Elektrisch leitendes Gummi
- 21:: Löffelkopf
- 22:: Löffelkopfanschluss
- 23:: Handgriff

## Patentansprüche

1. Löffelwaage mit einem Handgriff (23), einem Löffelkörper (11) und einem Gewichtssensor (12), wobei der Handgriff eine obere Abdeckung (9) und eine untere Abdeckung (13) umfasst und dazu eingerichtet ist, von der Hand eines Benutzers ergriffen und gehalten zu werden, wobei der Gewichtssensor (12) im Kraftschluss zwischen dem Löffelkörper (11) und dem Handgriff (23) liegt, wobei die Lastrichtung des Gewichtssensors senkrecht zu einer Horizontalebene stcht und ein Horizontalsensor (7) vorgesehen ist, der zur Messung der Ausrichtung der Löffelwaage bezüglich der Horizontalebene eingerichtet ist, und wobei der Löffelkörper (11) einen Löffelkopf (21) und einen dem Löffelkopf abgewandt angeordneten Löffelkopfanschluss (22) aufweist, **dadurch gekennzeichnet, dass** der Gewichtssensor (12) an seinem dem Löffelkopfanschluss (22) abgewandten Ende eine parallel zu der Horizontalebene ausgerichtete Anlagefläche aufweist und im Bereich dieser Anlagefläche mittels Schrauben (8) mit der unteren Abdeckung (13) verbunden ist, wobei die Schrauben (8) senkrecht zu der Horizontalebene ausgerichtet sind.

2. Löffelwaage nach Anspruch 1, **dadurch gekennzeichnet, dass** der Löffelkörper 11 nicht unmittelbar in mechanischem Kontakt mit dem Handgriff (23), insbesondere mit einer oberen Abdeckung (9) oder einer unteren Abdeckung (13) steht.

3. Löffelwaage nach einem der vorhergehenden Ansprüche, **dadurch gekennzeichnet, dass** die Lastrichtung des Gewichtssensors (12) senkrecht zu der Horizontalebene steht, die von dem Horizontalsensor (7) erfasst wird.

4. Löffelwaage nach einem der vorhergehenden Ansprüche, **dadurch gekennzeichnet, dass** der Horizontalsensor 7 in einer Öffnung einer Linse (4) an dem Handgriff (23) angeordnet ist.

5. Löffelwaage nach einem der vorhergehenden Ansprüche, **dadurch gekennzeichnet, dass** eine Gewichtsmessung nur dann ausgeführt wird, wenn der Horizontalsensor (7) eine Neigung der Löffelwaage von weniger als 5° gegenüber der Horizontalebene ermittelt.

6. Löffelwaage nach einem der vorhergehenden Ansprüche, **dadurch gekennzeichnet, dass** der Gewichtssensor (12) als Widerstandsbrücke ausgeführt ist.

## Claims

1. Spoon scale having a hand grip (23), a spoon bowl (11) and a weight sensor (12), wherein the hand grip comprises an upper cover (9) and a lower cover (13) and is configured to be grasped and held by the hand of a user, wherein the weight sensor (12) lies with a forcefit between the spoon bowl (11) and the hand grip (23), wherein the load direction of the weight sensor is perpendicular to a horizontal plane and a horizontal sensor (7) is provided, which is configured to measure the alignment of the spoon scale in relation to the horizontal plane, and wherein the spoon bowl (11) has a spoon head (21) and a spoon head connection (22) arranged facing away from the spoon head, **characterised in that** the weight sensor (12) has, at its end facing away from the spoon head connection (22), a contact surface aligned parallel to the horizontal plane and, in the region of this contact surface, is connected to the lower cover (13) by means of screws (8), wherein the screws (8) are aligned perpendicular to the horizontal plane.

2. Spoon scale according to Claim 1, **characterised in that** the spoon bowl 11 is not directly in mechanical contact with the hand grip (23), in particular with an upper cover (9) or a lower cover (13).

3. Spoon scale according to one of the preceding claims, **characterised in that** the load direction of the weight sensor (12) is perpendicular to the horizontal plane, which is measured by the horizontal sensor (7).

4. Spoon scale according to one of the preceding claims, **characterised in that** the horizontal sensor 7 is arranged in an opening of a lens (4) on the hand grip (23).

5. Spoon scale according to one of the preceding claims, **characterised in that** a weight measurement is carried out only when the horizontal sensor (7) determines an inclination of the spoon scale of less than 5° in relation to the horizontal plane.

6. Spoon scale according to one of the preceding claims, **characterised in that** the weight sensor (12) is designed as a resistance bridge.

## Revendications

1. Cuillère de pesée comprenant un manche (23), un corps de cuillère (11) et un capteur de poids (12), le manche comportant un capotage de fermeture supérieur (9) et un capotage de fermeture inférieur (13) et étant conçu pour être saisi et maintenu par la main d'un utilisateur, le capteur de poids (12) étant situé dans la ligne de transmission de force entre le corps de cuillère (11) et le manche (23), la direction de charge du capteur de poids étant d'une orientation perpendiculaire à un plan horizontal pour lequel est prévu un capteur d'horizontale (7), qui est conçu pour mesurer l'orientation de la cuillère de pesée par rapport au plan horizontal, et le corps de cuillère (11) présentant une tête de cuillère (21) et un raccord de tête de cuillère (22) agencé de manière à s'écarter de la tête de cuillère, **caractérisée en ce que** le capteur de poids (12) présente, à son extrémité éloignée du raccord de tête de cuillère (22), une surface d'appui orientée parallèlement au plan horizontal, et est relié, dans la zone de cette surface d'appui, au moyen de vis (8), au capotage de fermeture inférieur (13), les vis (8) étant orientées perpendiculairement au plan horizontal.

2. Cuillère de pesée selon la revendication 1, **caractérisée en ce que** le corps de cuillère (11) ne se trouve pas en contact mécanique direct avec le manche (23), notamment avec un capotage de fermeture supérieur (9) ou un capotage de fermeture inférieur (13).

3. Cuillère de pesée selon l'une des revendications précédentes, **caractérisée en ce que** la direction de charge du capteur de poids (12) est orienté perpendiculairement au plan horizontal, qui est relevé par le capteur d'horizontale (7).

4. Cuillère de pesée selon l'une des revendications précédentes, **caractérisée en ce que** le capteur d'horizontale (7) est agencé dans une ouverture d'une lentille (4), sur le manche (23).

5. Cuillère de pesée selon l'une des revendications précédentes, **caractérisée en ce qu'**une mesure de poids n'est exécutée que lorsque le capteur d'horizontale (7) détermine une inclinaison de la cuillère de pesée de moins de 5° par rapport au plan horizontal.

6. Cuillère de pesée selon l'une des revendications précédentes, **caractérisée en ce que** le capteur de poids (12) est réalisé sous la forme d'un pont de résistances.
